# EUROPEAN PATENT APPLICATION

(11) **EP 4 369 267 A1**
(43) Date of publication of application: **15.05.2024**
(21) Application number: 23784183.8
(22) Date of filing: 24.03.2023
(51) Int. Cl.: G06Q 10/10

(54) **UNMANNED INTELLIGENT MANUFACTURING SYSTEM**

(30) Priority: 09.04.2022 CN 202210368662
(71) Applicant: Guangzhou Double Win Automobile Equipment Group Co., Ltd., Guangzhou, Guangdong 510700 (CN); Jinan Double Win Automobile Equipment Enginnering Co., Ltd., Jinan, Shandong 250000 (CN); Jinan Double Win Automation Equipment Engineering Co., Ltd., Jinan, Shandong 250000 (CN); Guangzhou Double Win Mechanical Electrical Equipment Co., Ltd., Guangzhou, Guangdong 510799 (CN); Guangzhou Double Win Auto Parts Co., Ltd., Guangzhou, Guangdong 510530 (CN)
(72) Inventor: ZHANG, Chi, Guangzhou, Guangdong 510799 (CN); ZHANG, Sanyi, Jinan, Shandong 250000 (CN); CUI, Haibo, Jinan, Shandong 250000 (CN); ZHOU, Risheng, Jinan, Shandong 250000 (CN); YUAN, Jinqing, Guangzhou, Guangdong 510799 (CN); MA, Rendong, Jinan, Shandong 250000 (CN)
(74) Representative: ZHAOffice SPRL
(86) International application number: PCT/CN2023/083828
(87) International publication number: WO 2023/193619

(57) **Abstract**

Provided is an unmanned intelligent manufacturing system, including: a stamping factory unmanned intelligent manufacturing system, where an input end of the stamping factory unmanned intelligent manufacturing system is electrically connected to an ERP system, an output end of the stamping factory unmanned intelligent manufacturing system is electrically connected to an unmanned stamping line, and the stamping factory unmanned intelligent manufacturing system includes a material data module, a first material inventory module, a material BOM module, a scheduling planning module, and a device information module. The ERP system is provided to transmit collected market sales data and production plans into the stamping factory unmanned intelligent manufacturing system, the unmanned stamping line is controlled through the stamping factory unmanned intelligent manufacturing system to adjust a production decision in a workshop and auxiliary resources in the workshop is properly allocated according to a priority level, so that automatic manufacturing is implemented.

## Description

The present invention claims priority to Chinese Patent Application No. 202210368662.9, entitled "UNMANNED INTELLIGENT MANUFACTURING SYSTEM" and filed with the China National Intellectual Property Administration on April 9, 2022, which is incorporated herein by reference in its entirety.

### TECHNICAL FIELD

The present invention relates to the technical field of vehicle manufacturing stamping factories, and specifically, to an unmanned intelligent manufacturing system.

### BACKGROUND

During use of a vehicle manufacturing stamping factory, planning is performed manually by a worker, and a large number of workers are further required to operate machines. Consequently, automatic manufacturing cannot be performed, and a large number of workers are required for performing operations when a user uses the vehicle manufacturing stamping factory. As a result, the working intensity of the user is increased, and a lot of time is wasted.

### SUMMARY

To resolve the problems described in the background, an objective of the present invention is to provide an unmanned intelligent manufacturing system, which has an advantage of implementing automatic manufacturing, therefore resolving the problem that automatic manufacturing cannot be implemented.

To achieve the foregoing objective, the present invention provides a technical solution as follows: An unmanned intelligent manufacturing system, including a stamping factory unmanned intelligent manufacturing system, where an input end of the stamping factory unmanned intelligent manufacturing system is electrically connected to an ERP system, an output end of the stamping factory unmanned intelligent manufacturing system is electrically connected to an unmanned stamping line, and the stamping factory unmanned intelligent manufacturing system includes a material data module, a first material inventory module, a material BOM module, a scheduling planning module, and a device information module.

The ERP system includes an order production module, a warehouse data module, a second material inventory module, a material BOM, and an automatic scheduling module, an output end of the order production module is electrically connected to an input end of the material data module, an output end of the warehouse data module is electrically connected to an input end of the first material inventory module, an output end of the second material inventory module is electrically connected to the input end of the first material inventory module, an output end of the material BOM is electrically connected to an output end of the material BOM module, and an output end of the automatic scheduling module is electrically connected to an input end of the scheduling planning module.

The unmanned stamping line includes an uncoiling blanking line, a stamping line, automatic quality detection, automatic boxing, stereoscopic storage, and an AGV system, an output end of the device information module is electrically connected to an input end of the uncoiling blanking line, the output end of the device information module is electrically connected to an input end of the stamping line, the output end of the device information module is electrically connected to an input end of the automatic quality detection, the output end of the device information module is electrically connected to an input end of the automatic boxing, the output end of the device information module is electrically connected to an input end of the stereoscopic storage, the output end of the device information module is electrically connected to an input end of the AGV system, an output end of the scheduling planning module is electrically connected to the input end of the uncoiling blanking line, the output end of the scheduling planning module is electrically connected to the input end of the stamping line, an output end of the material data module is electrically connected to the input end of the uncoiling blanking line, the output end of the material data module is electrically connected to the input end of the stamping line, the output end of the material BOM module is electrically connected to the input end of the uncoiling blanking line, and the output end of the material BOM module is electrically connected to the input end of the stamping line.

In a preferred embodiment of the present invention, a management system and an execution system are provided inside the stamping factory unmanned intelligent manufacturing system, the management system includes production management, device management, quality management, material management, production line management, personnel management, master control presentation, and slave control presentation, and the execution system includes a line head automatic feeding system, a planned process management system, an AGV automatic conveying system, a product automatic quality detection system, a line tail automatic boxing system, an inventory material management system, an end picking-up device automatic changing system, and a mold storage and changing system.

In a preferred embodiment of the present invention, the AGV automatic conveying system is an intelligent unmanned forklift or a trackless intelligent automated guided vehicle, and a transportation weight of the forklift is less than 5 tons.

In a preferred embodiment of the present invention, the first material inventory module is a warehouse, and an intelligent barcode scanning apparatus for identifying a category of a material box is provided inside the warehouse.

In a preferred embodiment of the present invention, the output end of the scheduling planning module is electrically connected to a mobile phone terminal, and the mobile phone terminal is a smartphone.

In a preferred embodiment of the present invention, a visualization system is provided inside the device information module, and the visualization system is a high-definition camera.

In a preferred embodiment of the present invention, the scheduling planning module is a computer, and the order production module is a keyboard and a mouse.

In a preferred embodiment of the present invention, the stamping line is a stamping workshop, and the automatic quality detection is an unmanned product quality detection apparatus.

**Compared with the related art, the present invention has the following beneficial effects:**
1. In the present invention, the ERP system is provided to transmit collected market sales data into the stamping factory unmanned intelligent manufacturing system, the unmanned stamping line is controlled through the stamping factory unmanned intelligent manufacturing system to adjust a production decision in a workshop between production first and new vehicle model first, and auxiliary resources in the workshop is properly allocated according to a priority level, so that automatic manufacturing is implemented, and the problem that automatic manufacturing cannot be implemented is resolved. The unmanned intelligent manufacturing system has an advantage of implementing automatic manufacturing, so that the system does not required a large number of workers to perform operations when the system is used by a user, thereby reducing the working intensity of the user and saving a lot of time.
2. In the present invention, the management system is provided, so that the unmanned stamping line may be monitored, thereby facilitating management by a manager.
3. In the present invention, the AGV automatic conveying system is provided, so that raw materials may be conveyed, thereby helping a worker to convey the raw materials.
4. In the present invention, the first material inventory module is set to a warehouse, so that the raw materials and processed workpieces may be stored.
5. In the present invention, the mobile phone terminal is provided, so that a plan arranged by the scheduling planning module may be sent to the management team, preventing the management team from being unable to process the plan in time when the management team is not in the factory, and each post staff may learn of working content of himself/herself through the mobile phone terminal and prepare for the working content in advance.
6. In the present invention, the visualization system is provided, which facilitates working implementation of each post on site and management by a leader over on-site working. It is proposed to add a visualization management board to a workshop and the office, to display in real time whether each working schedule, planned implementation scheme, and preparation working of each post are completed, whether a project progress goes well, and whether there is early warning.
7. In the present invention, the scheduling planning module is a computer, so that each worker may view a plan directly, and the order production module is a keyboard and a mouse, so that the worker can input detailed information to the scheduling planning module.
8. In the present invention, the stamping line is a stamping workshop, so that unordered arrangement of apparatuses in the stamping line may be prevented, thereby facilitating management by a worker.

### BRIEF DESCRIPTION OF THE DRAWINGS

FIG. 1 is a systematical diagram according to the present invention;
FIG. 2 is a systematical diagram of connection between a stamping factory unmanned intelligent manufacturing system and an ERP system according to the present invention;
FIG. 3 is a systematical diagram of connection between a stamping factory unmanned intelligent manufacturing system and an unmanned stamping line according to the present invention;
FIG. 4 is a systematical diagram of a working process of a stamping factory unmanned intelligent manufacturing system according to the present invention; and
FIG. 5 is a systematical architectural diagram of a stamping factory unmanned intelligent manufacturing system according to the present invention.

### DETAILED DESCRIPTION

The following clearly and completely describes the technical solutions in the embodiments of the present invention with reference to the accompanying drawings of the present invention. Apparently, the described embodiments are merely some of the embodiments of the present invention rather than all of the embodiments. All other embodiments obtained by a person of ordinary skill in the art based on the embodiments of the present invention without any creative efforts shall fall within the protection scope of the present invention.

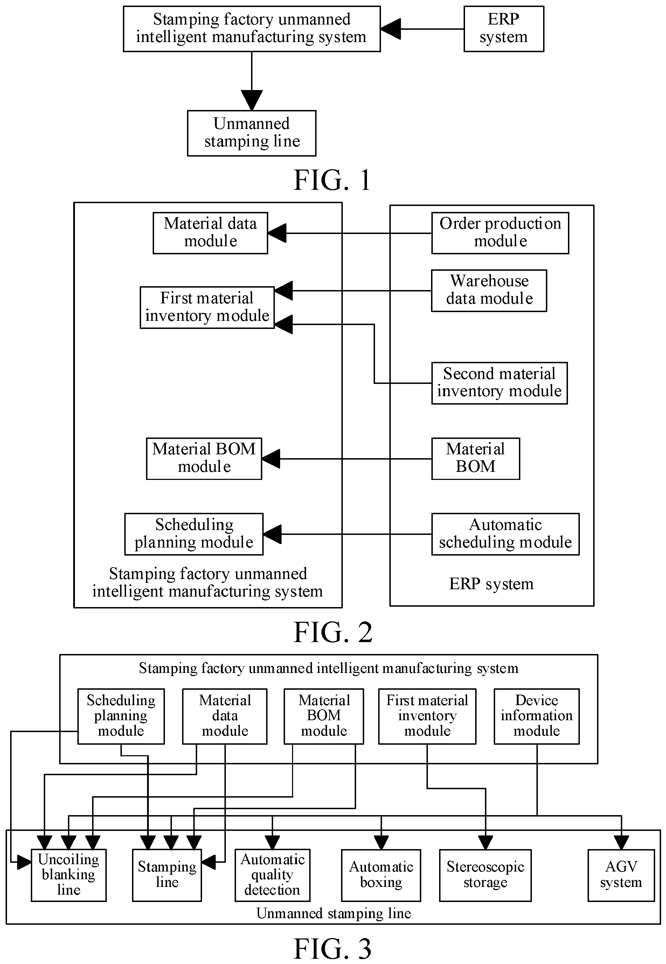

As shown in FIG. 1 to FIG. 5, the present invention provides an unmanned intelligent manufacturing system, including a stamping factory unmanned intelligent manufacturing system. An input end of the stamping factory unmanned intelligent manufacturing system is electrically connected to an ERP system, an output end of the stamping factory unmanned intelligent manufacturing system is electrically connected to an unmanned stamping line, and the stamping factory unmanned intelligent manufacturing system includes a material data module, a first material inventory module, a material BOM module, a scheduling planning module, and a device information module.

The ERP system includes an order production module, a warehouse data module, a second material inventory module, a material BOM, and an automatic scheduling module, an output end of the order production module is electrically connected to an input end of the material data module, an output end of the warehouse data module is electrically connected to an input end of the first material inventory module, an output end of the second material inventory module is electrically connected to the input end of the first material inventory module, an output end of the material BOM is electrically connected to an output end of the material BOM module, and an output end of the automatic scheduling module is electrically connected to an input end of the scheduling planning module.

The unmanned stamping line includes an uncoiling blanking line, a stamping line, automatic quality detection, automatic boxing, stereoscopic storage, and an AGV system. An output end of the device information module is electrically connected to an input end of the uncoiling blanking line, the output end of the device information module is electrically connected to an input end of the stamping line, the output end of the device information module is electrically connected to an input end of the automatic quality detection, the output end of the device information module is electrically connected to an input end of the automatic boxing, the output end of the device information module is electrically connected to an input end of the stereoscopic storage, the output end of the device information module is electrically connected to an input end of the AGV system, an output end of the scheduling planning module is electrically connected to the input end of the uncoiling blanking line, the output end of the scheduling planning module is electrically connected to the input end of the stamping line, an output end of the material data module is electrically connected to the input end of the uncoiling blanking line, the output end of the material data module is electrically connected to the input end of the stamping line, the output end of the material BOM module is electrically connected to the input end of the uncoiling blanking line, and the output end of the material BOM module is electrically connected to the input end of the stamping line.

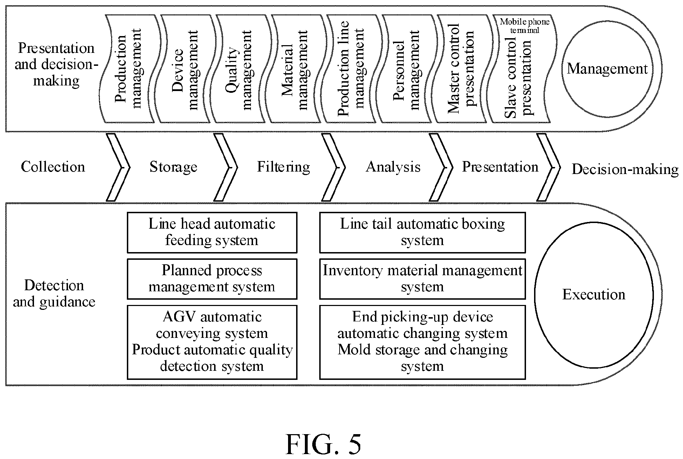

Referring to FIG. 5, a management system and an execution system are provided inside the stamping factory unmanned intelligent manufacturing system, the management system includes production management, device management, quality management, material management, production line management, personnel management, master control presentation, and slave control presentation, and the execution system includes a line head automatic feeding system, a planned process management system, an AGV automatic conveying system, a product automatic quality detection system, a line tail automatic boxing system, an inventory material management system, an end picking-up device automatic changing system, and a mold storage and changing system.

As a technical optimization solution of the present invention, the management system is provided, so that the unmanned stamping line may be monitored, thereby facilitating management by a manager.

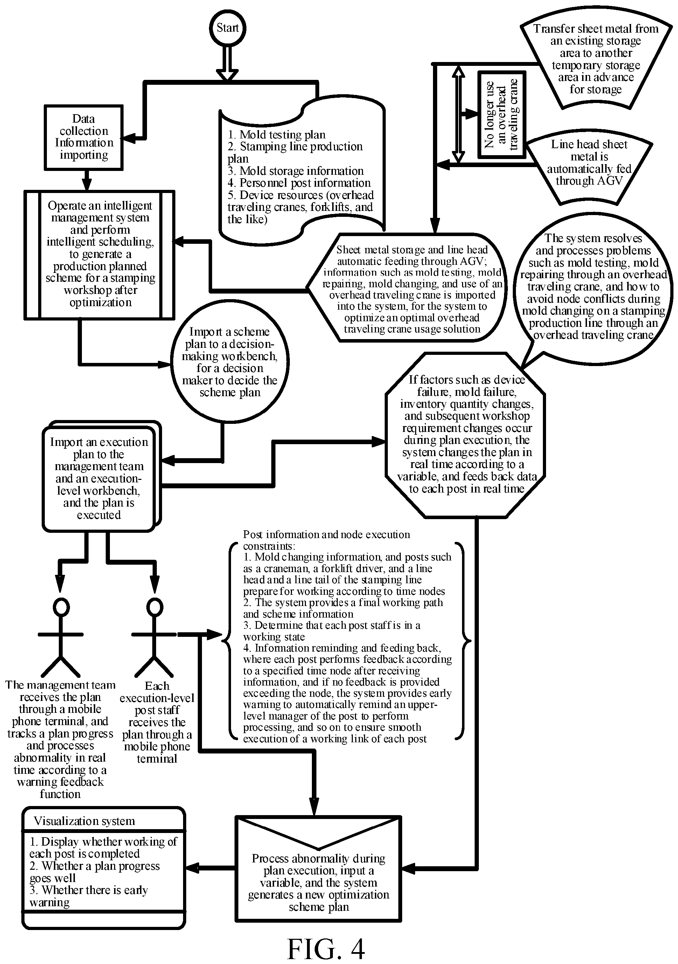

Referring to FIG. 4, the AGV automatic conveying system is an intelligent unmanned forklift or a trackless intelligent automated guided vehicle, and a transportation weight of the forklift is less than 5 tons.

As a technical optimization solution of the present invention, the AGV automatic conveying system is provided, so that raw materials may be conveyed, thereby helping a worker to convey the raw materials.

Referring to FIG. 2, the first material inventory module is a warehouse, and an intelligent barcode scanning apparatus for identifying a category of a material box is provided inside the warehouse.

As a technical optimization solution of the present invention, the first material inventory module and the second material inventory module are set to warehouses, so that the raw materials and processed workpieces may be stored.

Referring to FIG. 4, the output end of the scheduling planning module is electrically connected to a mobile phone terminal, and the mobile phone terminal is a smartphone.

As a technical optimization solution of the present invention, the mobile phone terminal is provided, so that a plan arranged by the scheduling planning module may be sent to the management team, preventing the management team from being unable to process the plan in time when the management team is not in the factory.

Referring to FIG. 4, a visualization system is provided inside the device information module, and the visualization system is a high-definition camera.

As a technical optimization solution of the present invention, the visualization system is provided, which facilitates working implementation of each post on site and management by a leader over on-site working. It is proposed to add a visualization management board to a workshop and the office, to display in real time whether each working schedule, planned implementation scheme, and preparation working of each post are completed, whether a project progress goes well, and whether there is early warning.

Referring to FIG. 2, the scheduling planning module is a computer, and the order production module is a keyboard and a mouse.

As a technical optimization solution of the present invention, the scheduling planning module is a computer, so that each worker may view a plan directly, and the order production module is a keyboard and a mouse, so that the worker can input detailed information to the scheduling planning module.

Referring to FIG. 3, the stamping line is a stamping workshop, and the automatic quality detection is a product quality detection apparatus.

As a technical optimization solution of the present invention, the stamping line is a stamping workshop, so that unordered arrangement of apparatuses in the stamping line may be prevented, thereby facilitating management by a worker.

A working principle and a usage procedure of the present invention are as follows: During use, a worker first transmits data into the scheduling planning module through the automatic scheduling module, the scheduling planning module performs analysis and scheduling production on the data to generate a planned order, warehouse inventory data is then transmitted into the first material inventory module through the warehouse data module and the second material inventory module, after transmission of the data is completed, the material BOM transmit the collected data into the material BOM module, the order production module transmits order data into the material data module, the material data module drives the uncoiling blanking line and the stamping line based on the order data, to process raw materials transported by the first material inventory module and the material BOM module through the uncoiling blanking line and the stamping line to shape the raw materials, the automatic quality detection then performs detection on the shaped raw materials and the automatic boxing performs boxing on the shaped raw materials, and the shaped raw materials are then placed in the stereoscopic storage for storage, thereby implementing automatic manufacturing.

Based on the above, in the unmanned intelligent manufacturing system, the ERP system is provided to transmit collected market sales data into the stamping factory unmanned intelligent manufacturing system, the unmanned stamping line is controlled through the stamping factory unmanned intelligent manufacturing system to adjust a production decision in a workshop between production first and new vehicle model first, and auxiliary resources in the workshop is properly allocated according to a priority level, so that automatic manufacturing is implemented, and the problem that automatic manufacturing cannot be implemented is resolved.

It should be noted that, in this specification, the relational terms such as first and second are used merely to differentiate an entity or operation from another entity or operation, and do not necessarily require or imply any actual relationship or sequence between the entities or operations. In addition, the term "include", "comprise", or any variant thereof is intended to cover non-exclusive inclusion. Therefore, a process, a method, an article, or a device that includes a series of elements not only includes such elements, but also includes other elements that are not listed expressly, or may include elements inherent to the process, the method, the article, or the device.

Although the embodiments of the present invention are already shown and described, a person of ordinary skill in the art may understand that various changes, modifications, replacements and variations may be made to the embodiments without departing from the principle and spirit of the present invention, and the scope of the present invention is as defined by the appended claims and their equivalents.

## Claims

1. An unmanned intelligent manufacturing system, comprising a stamping factory unmanned intelligent manufacturing system, wherein an input end of the stamping factory unmanned intelligent manufacturing system is electrically connected to an ERP system, an output end of the stamping factory unmanned intelligent manufacturing system is electrically connected to an unmanned stamping line, and the stamping factory unmanned intelligent manufacturing system comprises a material data module, a first material inventory module, a material BOM module, a scheduling planning module, and a device information module, wherein
the ERP system comprises an order production module, a warehouse data module, a second material inventory module, a material BOM, and an automatic scheduling module, an output end of the order production module is electrically connected to an input end of the material data module, an output end of the warehouse data module is electrically connected to an input end of the first material inventory module, an output end of the second material inventory module is electrically connected to the input end of the first material inventory module, an output end of the material BOM is electrically connected to an output end of the material BOM module, and an output end of the automatic scheduling module is electrically connected to an input end of the scheduling planning module; and
the unmanned stamping line comprises an uncoiling blanking line, a stamping line, automatic quality detection, automatic boxing, stereoscopic storage, and an AGV system, an output end of the device information module is electrically connected to an input end of the uncoiling blanking line, the output end of the device information module is electrically connected to an input end of the stamping line, the output end of the device information module is electrically connected to an input end of the automatic quality detection, the output end of the device information module is electrically connected to an input end of the automatic boxing, the output end of the device information module is electrically connected to an input end of the stereoscopic storage, the output end of the device information module is electrically connected to an input end of the AGV system, an output end of the scheduling planning module is electrically connected to the input end of the uncoiling blanking line, the output end of the scheduling planning module is electrically connected to the input end of the stamping line, an output end of the material data module is electrically connected to the input end of the uncoiling blanking line, the output end of the material data module is electrically connected to the input end of the stamping line, the output end of the material BOM module is electrically connected to the input end of the uncoiling blanking line, and the output end of the material BOM module is electrically connected to the input end of the stamping line.

2. The unmanned intelligent manufacturing system according to claim 1, wherein a management system and an execution system are provided inside the stamping factory unmanned intelligent manufacturing system, the management system comprises production management, device management, quality management, material management, production line management, personnel management, master control presentation, and slave control presentation, and the execution system comprises a line head automatic feeding system, a planned process management system, an AGV automatic conveying system, a product automatic quality detection system, a line tail automatic boxing system, an inventory material management system, an end picking-up device automatic changing system, and a mold storage and changing system.

3. The unmanned intelligent manufacturing system according to claim 2, wherein the AGV automatic conveying system is an intelligent unmanned forklift or a trackless intelligent automated guided vehicle, and a transportation weight of the forklift is less than 5 tons.

4. The unmanned intelligent manufacturing system according to claim 1, wherein the first material inventory module is a warehouse, and an intelligent barcode scanning apparatus for identifying a category of a material box is provided inside the warehouse.

5. The unmanned intelligent manufacturing system according to claim 1, wherein the output end of the scheduling planning module is electrically connected to a mobile phone terminal, and the mobile phone terminal is a smartphone.

6. The unmanned intelligent manufacturing system according to claim 1, wherein a visualization system is provided inside the device information module, and the visualization system is a high-definition camera.

7. The unmanned intelligent manufacturing system according to claim 1, wherein the scheduling planning module is a computer, and the order production module is a keyboard and a mouse.

8. The unmanned intelligent manufacturing system according to claim 1, wherein the stamping line is a stamping workshop, and the automatic quality detection is an unmanned product quality detection apparatus.
